# FASCICULE DE BREVET EUROPEEN

(11) **EP 0 903 264 B1**
(45) Date de publication et mention de la délivrance du brevet: **18.06.2003**
(21) Numéro de dépôt: 98402286.3
(22) Date de dépôt: 16.09.1998
(51) Int. Cl.: B60R 16/02

(54) **Système d'affichage d'informations pour véhicule automobile**
Kraftfahrzeug-Informationenanzeigesystem
Vehicle information display system

(30) Priorité: 19.09.1997 FR 9711715
(43) Date de publication de la demande: 24.03.1999
(73) Titulaire: AUTOMOBILES PEUGEOT, 75116 Paris (FR); AUTOMOBILES CITROEN, 92200 Neuilly-sur-Seine (FR)
(72) Inventeur: Bouvier, Yves, 90000 Belfort (FR)
(74) Mandataire: Habasque, Etienne Joel Jean-François

(56) Documents cités:
- DE-U- 29 710 675
- US-A- 5 121 112
- US-A- 5 453 939
- US-A- 5 648 755

## Description

La présente invention concerne un système d'affichage d'informations relatives à des états/événements de fonctionnement d'un véhicule automobile.

On connaît déjà dans l'état de la technique, des systèmes d'affichage de ce type qui comportent des moyens d'acquisition de données d'états/événements et des moyens d'affichage d'informations correspondantes pour prévenir un utilisateur de ce véhicule selon le préambule de la revendication 1, p. ex. US 5,121,112.

Ces systèmes sont par exemple utilisés pour avertir l'utilisateur d'un véhicule des conditions de fonctionnement du véhicule et lui indiquer par exemple des défauts ou des défaillances de fonctionnement de celui-ci.

Cependant, dans les systèmes d'affichage de l'état de la technique, les moyens d'acquisition contrôlent directement les moyens d'affichage et l'on conçoit que devant le nombre de plus en plus important d'informations à délivrer à l'utilisateur, celui-ci a du mal à percevoir les informations importantes et/ou urgentes.

Le but de l'invention est donc de résoudre ces problèmes.

A cet effet, l'invention a pour objet un système d'affichage d'informations relatives à des états/événements de fonctionnement d'un véhicule automobile, du type comportant des moyens d'acquisition de données d'états/événements et des moyens d'affichage d'informations correspondantes pour prévenir un utilisateur de ce véhicule, caractérisé en ce qu'il comporte, interposés entre les moyens d'acquisition et les moyens d'affichage, des moyens de traitement de ces données d'états/événements comportant des moyens de filtrage de celles-ci, des moyens de classification des données retenues après filtrage, par ordres de priorité en fonction de niveaux d'importance et d'urgence d'affichage et des moyens de contrôle du fonctionnement des moyens d'affichage des informations correspondantes pour assurer un affichage successif et cyclique de celles-ci par ordres de priorité, adaptés pour commander l'affichage d'informations correspondant à des données d'ordre de priorité supérieure uniquement, pendant une période de temps prédéterminée, avant d'autoriser l'affichage d'informations correspondant à des données d'ordre de priorité inférieure.

Avantageusement, les moyens de filtrage comportent des moyens de filtrage temporel et/ou des moyens de masquage des données d'états/ événements pour permettre le traitement de certaines données uniquement.

Avantageusement également, les moyens de classification par ordres de priorité des données d'états/événements, sont adaptés pour classer celles-ci en fonction de règles préétablies et stockées dans des moyens de mémorisation de celles-ci.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un système d'affichage d'informations selon l'invention;
- la Fig.2 représente un tableau de classification des données mis en oeuvre dans un exemple de réalisation d'un système d'affichage d'informations selon l'invention;
- les Figs.3 à 7 représentent différents tableaux illustrant différentes listes préétablies de données utilisées dans un système d'affichage selon l'invention; et
- les Figs.8 et 9 illustrent le fonctionnement des moyens d'affichage entrant dans la constitution d'un système selon l'invention.

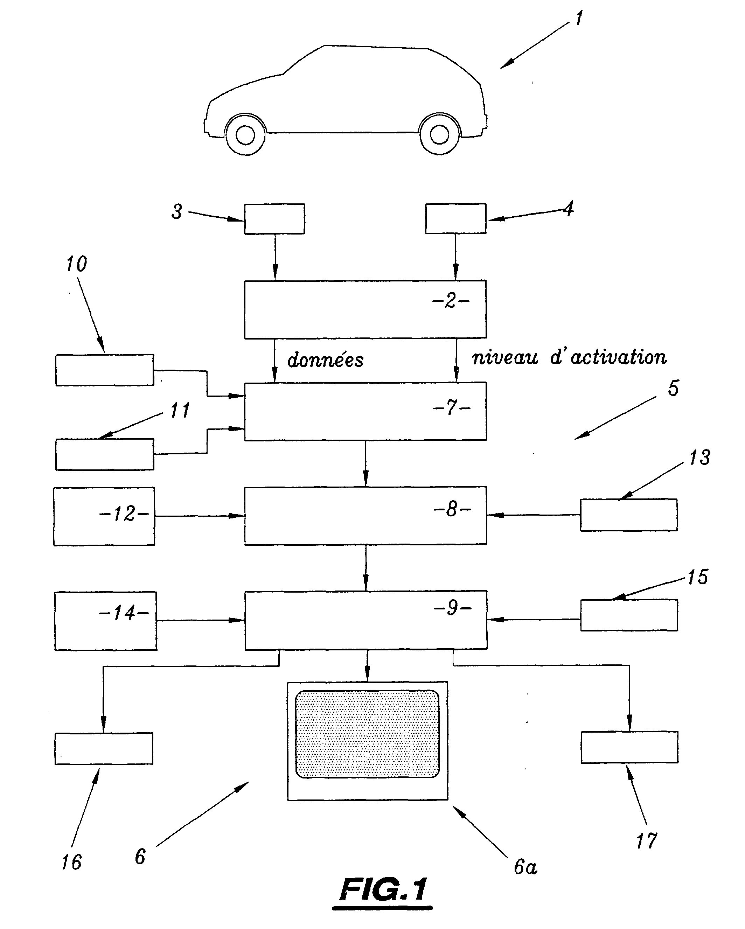

On reconnaît sur la figure 1, un système d'affichage d'informations relatives à des états/événements de fonctionnement d'un véhicule automobile, désigné par la référence générale 1 sur cette figure.

Un tel système comporte des moyens d'acquisition de données d'états/événements de fonctionnement du véhicule, ces moyens étant désignés par la référence générale 2.

Ces informations peuvent être acquises par exemple à partir d'un combiné d'instrumentation du véhicule désigné par la référence générale 3 ou à partir d'un réseau de transmission d'informations par exemple multiplexé, désigné par la référence générale 4.

Toutes ces informations sont recueillies par les moyens d'acquisition désignés par la référence générale 2.

Ces moyens d'acquisition 2 permettent alors d'acquérir les différentes données d'états/événements de fonctionnement du véhicule et le niveau d'activation de celui-ci.

Ces différentes données sont ensuite transmises à des moyens de traitement de celles-ci désignés par la référence générale 5 sur cette figure, qui sont interposés entre ces moyens d'acquisition 2 et des moyens d'affichage d'informations correspondantes pour prévenir un utilisateur du véhicule, ces moyens d'affichage étant désignés par la référence générale 6 sur cette figure 1.

Selon l'invention, ces moyens de traitement 5 de ces données d'états/événements comportent des moyens de filtrage de celles-ci désignés par la référence générale 7, des moyens de classification 8 des données retenues après filtrage, par ordres de priorité en fonction de niveaux d'importance et d'urgence d'affichage et des moyens de contrôle 9 du fonctionnement des moyens d'affichage des informations correspondantes pour assurer un affichage successif et cyclique de celles-ci par ordres de priorité.

Les moyens de filtrage désignés par la référence générale 7 peuvent comporter des moyens de filtrage temporel des données d'états/événements, désignés par la référence générale 10 sur cette figure 1, pour permettre le traitement de données uniquement présentes pendant au moins une période de temps prédéterminée.

C'est ainsi par exemple que l'utilisation de tels moyens de filtrage temporel permet d'éliminer des données transitoires afin d'éviter l'affichage d'informations incohérentes à l'utilisateur.

Cependant, ces moyens de filtrage peuvent également comporter des moyens de masquage de certaines données d'états/événéments, désignés par la référence générale 11 sur cette figure, pour permettre une sélection des données à traiter par les moyens de traitement.

Ceci permet alors de ne retenir que certaines données à traiter.

Ces moyens de filtrage peuvent être pilotés par des moyens de détection du niveau d'activation du véhicule afin d'adapter le traitement des données à ce niveau.

Comme cela a été indiqué précédemment, ce niveau d'activation du véhicule peut être déterminé à partir des informations acquises par les moyens d'acquisition 2.

Les moyens de classification par ordres de priorité des données d'états/événements sont quant à eux adaptés pour classer celles-ci en fonction de règles préétablies et stockées dans des moyens de mémorisation de celles-ci, tels que les moyens désignés par la référence générale 12 sur cette figure 1.

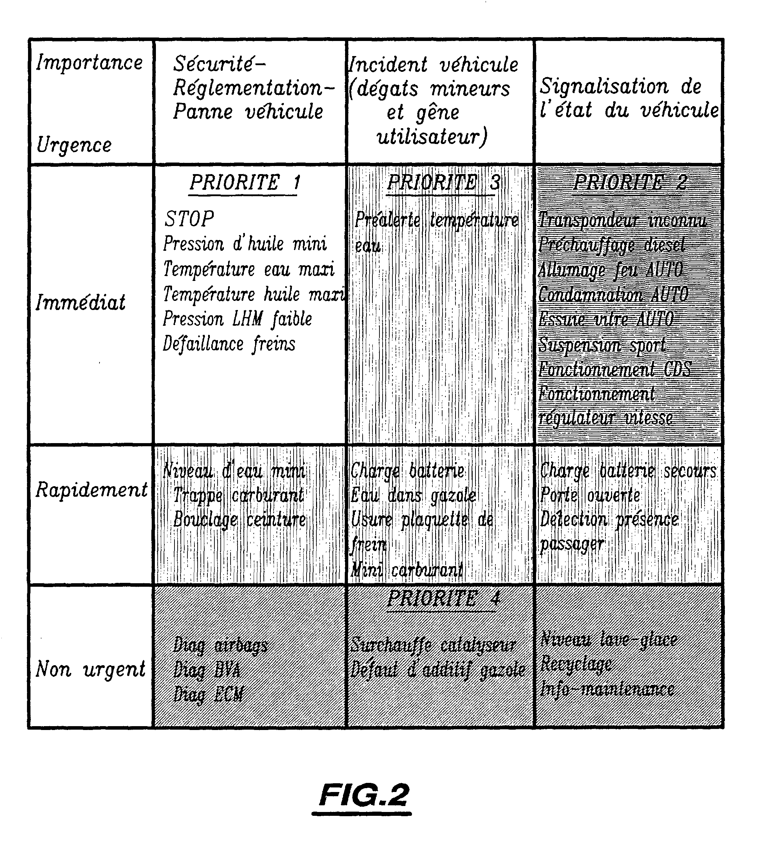

En fait, ces règles préétablies peuvent par exemple se présenter sous la forme d'au moins un tableau de classification, tel que celui illustré sur la figure 2.

Sur ce tableau, on voit en effet apparaître quatre niveaux de priorité qui ont été définis pour différentes données d'états/événements de fonctionnement du véhicule en fonction de niveaux d'importance et d'urgence d'affichage.

Les niveaux d'urgence d'affichage sont des niveaux immédiat, rapidement et non urgent, tandis que les niveaux d'importance d'affichage sont des niveaux dits de sécurité, d'incident véhicule et de signalisation de l'état du véhicule.

Une analyse des différentes données d'états/ événements de fonctionnement d'un véhicule permet de classer celles-ci dans l'un ou l'autre des niveaux de priorité définis, afin d'en assurer l'affichage comme cela sera décrit plus en détail par la suite.

Il va de soi bien entendu qu'un nombre différent de niveaux de priorité peut être envisagé et que des informations autres que celles mentionnées dans ce tableau de la figure 2, peuvent également être intégrées.

Chaque donnée d'états/événements de fonctionnement du véhicule possède donc un niveau de priorité déterminé selon son importance et son urgence d'affichage.

Ceci permet ensuite au système de gérer l'affichage des informations correspondantes en fonction de ces niveaux de priorité.

C'est ainsi par exemple que les moyens de contrôle 9 du fonctionnement des moyens d'affichage sont adaptés pour commander l'affichage d'informations correspondant à des données d'ordre de priorité supérieure uniquement pendant une période de temps prédéterminée, avant d'autoriser l'affichage d'informations correspondant à des données d'ordre de priorité inférieure, comme cela sera décrit plus en détail par la suite.

Les moyens de traitement 5 peuvent également comporter des moyens de mémorisation d'au moins une liste prédéterminée de données d'états/événements de fonctionnement du véhicule pour au moins un niveau déterminé d'activation de celui-ci. Ces ou cette listes sont par exemple stockées dans des moyens de mémorisation désignés par la référence générale 13 sur la figure 1, associés par exemple aux moyens de classification 8.

Dans ce cas, les moyens de classification 8 comportent des moyens de comparaison de données d'états/événements acquises pour ce niveau d'activation du véhicule, à cette ou ces listes prédéterminées de données pour amener les moyens 9 de contrôle du fonctionnement des moyens d'affichage à déclencher l'affichage d'une information prédéterminée en fonction du résultat de cette comparaison.

C'est ainsi par exemple que la ou chaque liste prédéterminée de données peut comporter des données de défauts/défaillances de fonctionnement du véhicule, associée à un niveau d'activation du véhicule, tandis que les moyens 9 de contrôle du fonctionnement des moyens d'affichage 6 sont adaptés pour commander l'affichage d'une information de bon fonctionnement du véhicule si aucune donnée de la ou de chaque liste prédéterminée n'est détectée dans les données acquises.

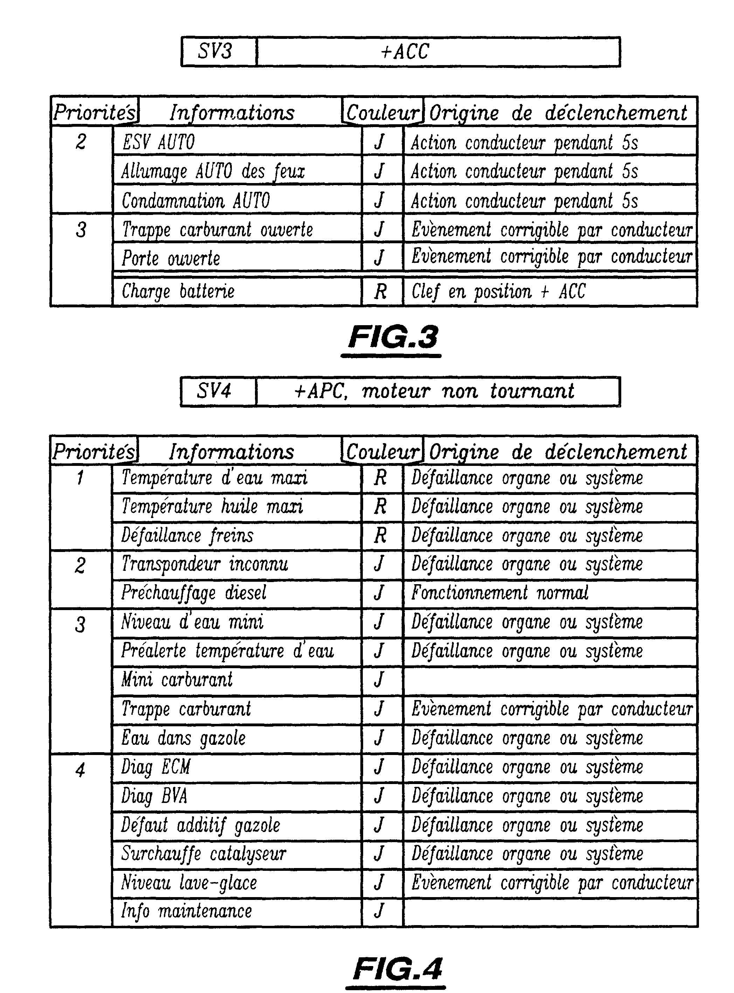

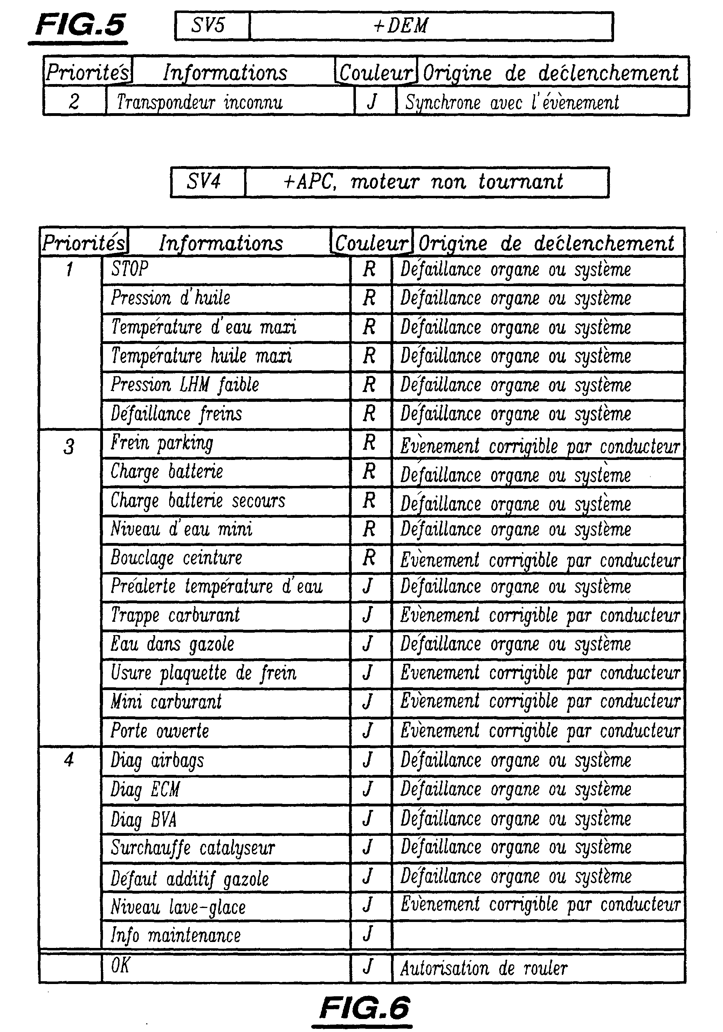

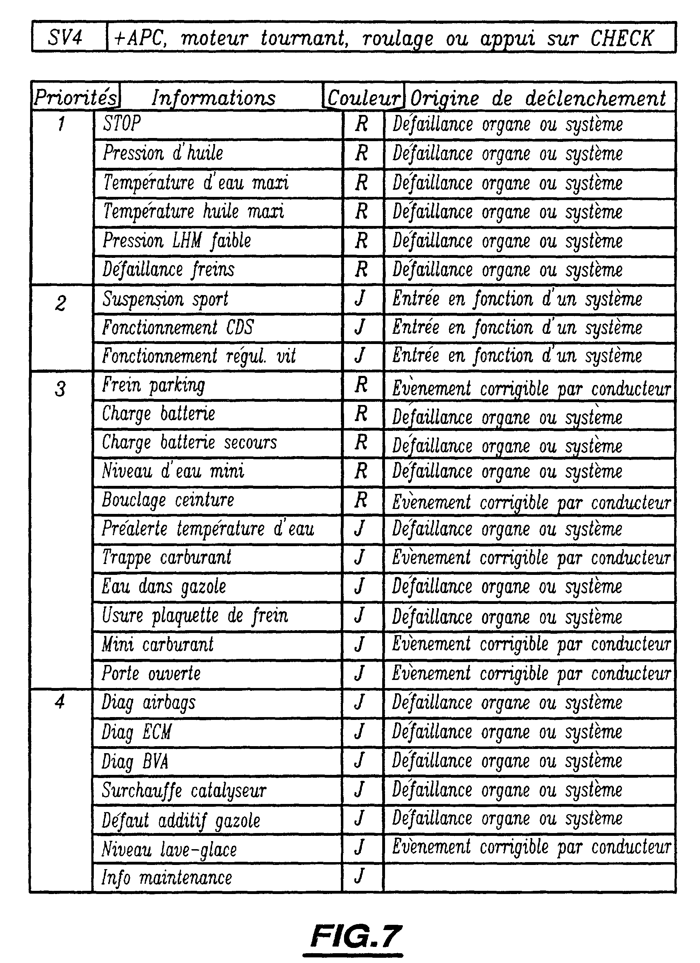

De telles listes d'informations sont par exemple données sur les figures 3,4,5,6 et 7, dans lesquelles à chaque niveau d'activation du véhicule, correspond une liste de données d'états/événements de fonctionnement du véhicule qui doivent être absentes des données acquises afin d'assurer l'affichage d'une information de bon fonctionnement du véhicule.

De façon complémentaire, les informations correspondant à un défaut/défaillance de fonctionnement du véhicule peuvent être affichées en fonction de ce niveau d'activation.

On notera que les moyens de traitement 5 peuvent également être associés à un organe de commande d'une fonction de contrôle CHECK désignée par la référence générale 14 sur cette figure, permettant de contrôler le bon fonctionnement du véhicule par comparaison des données acquises aux données des listes stockées et un organe 15 de commande d'un affichage rapide des différentes informations de défauts/défaillances détectées.

Comme on l'a indiqué précédemment, les moyens de contrôle 9 du fonctionnement des moyens d'affichage sont adaptés pour commander l'affichage d'informations correspondant à des données d'ordre de priorité supérieure uniquement pendant une période de temps prédéterminée, avant d'autoriser l'affichage d'informations correspondant à des données d'ordre de priorité inférieure.

Dans ce cas, les moyens 15 de déclenchement de l'affichage successif rapide de toutes les informations commandent cet affichage sans tenir compte de cette période de temps prédéterminée.

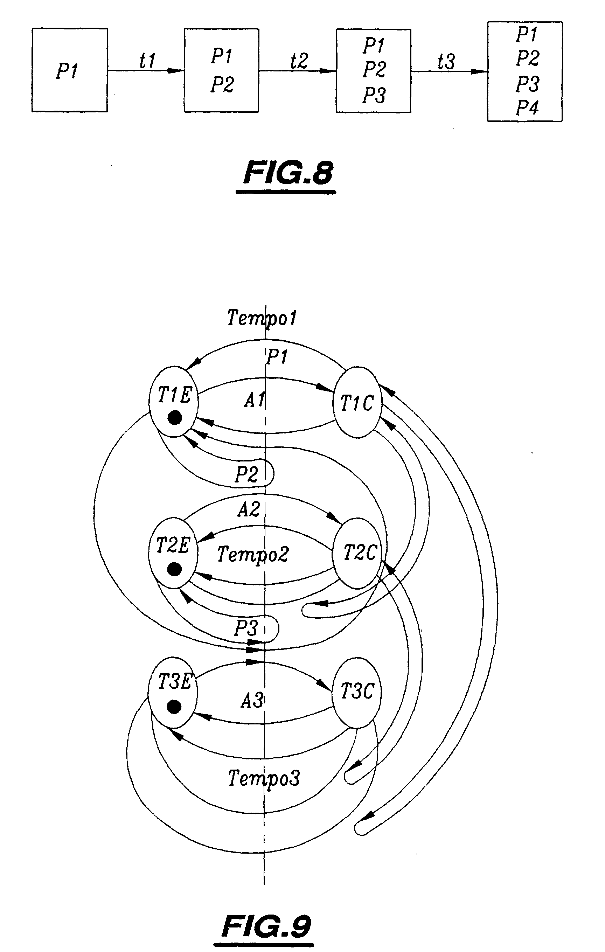

Cependant, et comme on peut le voir sur la figure 8, en fonctionnement normal, les moyens de contrôle 9 n'autorisent l'affichage d'informations correspondant à des données d'ordre de priorité inférieure que lorsqu'une temporisation correspondante est écoulée.

C'est ainsi par exemple comme on peut le voir sur les figures 8 et 9, que pendant une première période de temps t1, seules les informations de niveau de priorité 1 peuvent être affichées. A l'expiration de cette temporisation t1, les informations de niveau de priorité P1 et P2 peuvent être affichées et ainsi de suite.

Si une information de niveau de priorité supérieure doit être affichée, les moyens de contrôle 9 réinitialisent l'affichage en partant du niveau de priorité correspondant.

En fait, et dans le cas où quatre niveaux de priorité sont déterminés, cet affichage est basé sur la gestion de trois temporisations t1,t2 et t3. Celles-ci possèdent chacune deux états, c'est-à-dire un état de temporisation écoulée TXE et un état de temporisation en cours TXC.

L'arrivée d'une information de niveau de priorité 1 réarme la temporisation t1 et la fait passer dans l'état T1C. Le principe est le même pour les informations des autres niveaux de priorité.

L'affichage d'informations de niveau de priorité 2 n'est possible que si la temporisation t1 est dans l'état T1E. L'affichage d'informations de niveau de priorité 3 n'est possible que si la temporisation t2 est dans l'état T2E et la temporisation t1 est dans l'état T1E. Ceci permet de garantir un temps d'affichage minimum pour chaque niveau de priorité d'informations.

Dans le cas où deux informations de même niveau de priorité sont à afficher, celles-ci sont affichées en alternance sur les moyens d'affichage.

On a indiqué précédemment que les moyens de contrôle étaient reliés à des moyens d'affichage d'informations 6.

Ces moyens d'affichage d'informations peuvent comporter une matrice d'affichage de pictogrammes relatifs aux données d'états/événements, telle que la matrice désignée par la référence générale 6a sur cette figure 1.

Cependant, ces moyens d'affichage d'informations peuvent également comporter un afficheur alphanumérique sur lequel est affiché un message correspondant, cet afficheur étant désigné par la référence générale 16 sur la figure 1.

On notera que les informations relatives à des données d'ordre de priorité différents se distinguent sur la matrice d'affichage par au moins une caractéristique différente, cette caractéristique différente pouvant par exemple être la couleur des informations correspondantes.

De même, les moyens de traitement 5 peuvent également comporter des moyens de génération d'un signal d'alarme sonore et/ou visuelle dont le fonctionnement est déclenché en association avec l'affichage d'informations correspondant à des données d'ordre de priorité supérieure.

Ces moyens de génération d'un signal d'alarme sont désignés par la référence générale 17 sur cette figure 1 et peuvent par exemple être pilotés en même temps que les moyens d'affichage d'informations.

On conçoit alors que le système selon l'invention présente un certain nombre d'avantages par rapport aux systèmes de l'état de la technique dans la mesure où il permet d'améliorer la présentation des informations aux utilisateurs du véhicule en classant les données d'états/événements de fonctionnement du véhicule par degrés de priorité afin d'assurer un bon affichage de celles-ci.

Le fonctionnement de ce système peut être piloté par un calculateur programmé pour remplir les différentes fonctions qui ont été décrites précédemment.

## Revendications

1. Système d'affichage d'informations relatives à des états/événements de fonctionnement d'un véhicule automobile, du type comportant des moyens (2) d'acquisition de données d'états/événements et des moyens (6) d'affichage d'informations correspondantes pour prévenir un utilisateur de ce véhicule, comportant, interposés entre les moyens d'acquisition (2) et les moyens d'affichage (6), des moyens de traitement (5) de ces données d'états/événements **caractérisé en ce que** les moyens comportent des moyens de filtrage (7) de celles-ci, des moyens de classification (8) des données retenues après filtrage, par ordres de priorité en fonction de niveaux d'importance et d'urgence d'affichage et des moyens de contrôle (9) du fonctionnement des moyens d'affichage (6) des informations correspondantes pour assurer un affichage successif et cyclique de celles-ci par ordres de priorité, adaptés pour commander l'affichage d'informations correspondant à des données d'ordre de priorité supérieure uniquement, pendant une période de temps prédéterminée (t1,t2,t3), avant d'autoriser l'affichage d'informations correspondant à des données d'ordre de priorité inférieure.

2. Système selon la revendication 1, **caractérisé en ce que** les moyens de filtrage (7) comportent des moyens de filtrage temporel (10) des données d'états/événements pour permettre le traitement de données uniquement présentes pendant au moins une période de temps prédéterminée.

3. Système selon la revendication 1 ou 2, **caractérisé en ce que** les moyens de filtrage (7) comportent des moyens de masquage (11) de certaines données d'états/ événements pour permettre une sélection des données à traiter par les moyens de traitement.

4. Système selon la revendication 3, **caractérisé en ce que** les moyens de filtrage (7) sont pilotés par des moyens de détection (2) du niveau d'activation du véhicule.

5. Système selon l'une quelconque des revendications précédentes, **caractérisé en ce que** les moyens de classification (8) par ordres de priorité des données d'états/ événements, sont adaptés pour classer celles-ci en fonction de règles préétablies et stockées dans des moyens de mémorisation de celles-ci (12).

6. Système selon la revendication 5, **caractérisé en ce que** les règles préétablies se présentent sous la forme d'au moins un tableau de classification.

7. Système selon l'une quelconque des revendications précédentes, **caractérisé en ce que** les moyens de traitement (5) comprennent en outre des moyens de mémorisation (13) d'au moins une liste prédéterminée de données d'états/ événements pour au moins un niveau déterminé d'activation du véhicule, et des moyens (8) de comparaison des données d'états/événements acquises pour ce niveau d'activation du véhicule, à cette liste prédéterminée de données et **en ce que** les moyens de contrôle (9) du fonctionnement des moyens d'affichage sont adaptés pour déclencher l'affichage d'une information prédéterminée en fonction du résultat de cette comparaison.

8. Système selon la revendication 7, **caractérisé en ce que** la liste prédéterminée de données comporte des données de défaut/défaillance de fonctionnement du véhicule et **en ce que** les moyens de contrôle (9) du fonctionnement des moyens d'affichage sont adaptés pour commander l'affichage d'une information de bon fonctionnement du véhicule, si aucune donnée de la liste prédéterminée n'est détectée dans les données acquises.

9. Système selon l'une quelconque des revendications précédentes, **caractérisé en ce que** les moyens de contrôle (9) du fonctionnement des moyens d'affichage des informations comportent des moyens de déclenchement (15) d'un affichage successif rapide de toutes les informations quel que soit l'ordre de priorité des données correspondantes.

10. Système selon l'une quelconque des revendications précédentes, **caractérisé en ce que** les moyens de traitement (5) comprennent des moyens (17) de génération d'un signal d'alarme sonore et/ou visuelle dont le fonctionnement est déclenché en association avec l'affichage d'informations correspondant à des données d'ordre de priorité supérieure.

11. Système selon la revendication 10, **caractérisé en ce que** le fonctionnement des moyens de génération du signal d'alarme (17) est déclenché en même temps que celui des moyens d'affichage d'informations (6).

12. Système selon l'une quelconque des revendications précédentes, **caractérisé en ce que** les moyens d'affichage (6) des informations comportent une matrice d'affichage (6a) de pictogrammes relatifs aux données d'états/ événements.

13. Système selon la revendication 12, **caractérisé en ce que** les moyens d'affichage (6) des informations comportent également un afficheur alphanumérique (16) sur lequel est affiché un message correspondant.

14. Système selon l'une quelconque des revendications précédentes, **caractérisé en ce que** les informations relatives à des données d'ordres de priorité différents se distinguent par au moins une caractéristique.

15. Système selon la revendication 14, **caractérisé en ce que** la caractéristique différente est la couleur des informations.

16. Système selon l'une quelconque des revendications précédentes, **caractérisé en ce que** des informations relatives à des données d'un même ordre de priorité sont affichées en alternance.

17. Système selon l'une quelconque des revendications précédentes, **caractérisé en ce que** le nombre d'ordres de priorité est de quatre.

## Patentansprüche

1. Vorrichtung zum Anzeigen von Informationen bezüglich der Funktionszustände/-ereignisse eines Kraftfahrzeuges mit Einrichtungen (2) zum Sammeln von Daten der Zustände/Ereignisse und Einrichtungen (6) zum Anzeigen von entsprechenden Informationen, um einen Benutzer des Fahrzeuges zu informieren, mit zwischen den Sammeleinrichtungen (2) und den Anzeigeeinrichtungen (6) angeordneten Verarbeitungseinrichtungen (5) für die Daten der Zustände/Ereignisse **dadurch gekennzeichnet, dass** diese Einrichtungen Filtereinrichtungen (7) hierfür, Einrichtungen (8) zum Klassifizieren der Daten, die nach der Filterung erhalten werden, nach Prioritätsreihenfolgen in Abhängigkeit von der Wichtigkeit und Dringlichkeit der Anzeige und Einrichtungen (9) zum Steuern der Arbeit der Anzeigeeinrichtungen (6) für die entsprechenden Informationen umfasst, um eine aufeinander folgende und zyklische Anzeige dieser Informationen nach den Prioritätsreihenfolgen sicherzustellen, die so ausgebildet sind, dass sie die Anzeige nur von Informationen, die Daten einer höheren Prioritätsreihenfolge entsprechen, während eines bestimmten Zeitintervalls (t1, t2, t3) befehlen, bevor die Anzeige von Informationen autorisiert wird, die Daten einer niedrigeren Prioritätsreihenfolge entsprechen.

2. Vorrichtung nach Anspruch 1, **dadurch gekennzeichnet, dass** die Filtereinrichtungen (7) Einrichtungen (10) zur zeitlichen Filterung der Daten der Zustände/Ereignisse umfassen, um nur Daten verarbeiten zu können, die während wenigstens eines bestimmten Zeitintervalls vorliegen.

3. Vorrichtung nach Anspruch 1 oder 2, **dadurch gekennzeichnet, dass** die Filtereinrichtungen (7) Maskiereinrichtungen (11) für gegebene Daten der Zustände/Ereignisse umfassen, um eine Auswahl der von den Verarbeitungseinrichtungen zu verarbeitenden Daten zu ermöglichen.

4. Vorrichtung nach Anspruch 3, **dadurch gekennzeichnet, dass** die Filtereinrichtungen (7) von Detektoreinrichtungen (2) für die Höhe der Aktivierung des Fahrzeuges angesteuert sind.

5. Vorrichtung nach einem der vorhergehenden Ansprüche, **dadurch gekennzeichnet, dass** die Klassifizierungseinrichtungen (8) der Daten der Zustände/Ereignisse nach Klassifizierungsreihenfolgen so ausgebildet sind, dass sie diese in Abhängigkeit von vorher festgelegten Regeln klassifizieren, die in Speichereinrichtungen (12) hierfür gespeichert sind.

6. Vorrichtung nach Anspruch 5, **dadurch gekennzeichnet, dass** die vorher festgelegten Regeln in Form wenigstens einer Klassifizierungstabelle vorliegen.

7. Vorrichtung nach einem der vorhergehenden Ansprüche, **dadurch gekennzeichnet, dass** die Verarbeitungseinrichtungen (5) weiterhin Einrichtungen (13) zum Speichern wenigstens einer vorbestimmten Liste von Daten der Zustände/Ereignisse für wenigstens eine bestimmte Höhe der Aktivierung des Fahrzeuges und Einrichtungen (8) zum Vergleichen der Daten der Zustände/Ereignisse, die für diese Höhe der Aktivierung des Fahrzeuges gesammelt wurden, mit dieser bestimmten Liste der Daten umfasst und dass die Steuereinrichtungen (9) für die Arbeit der Anzeigeeinrichtungen so ausgebildet sind, dass sie die Anzeige einer bestimmten Information in Abhängigkeit vom Ergebnis dieses Vergleiches auslösen.

8. Vorrichtung nach Anspruch 7, **dadurch gekennzeichnet, dass** die bestimmte Liste der Daten Daten über Störungen/Fehler der Funktion des Fahrzeuges umfassen und dass die Steuereinrichtungen (9) für die Arbeit der Anzeigeeinrichtungen so ausgebildet sind, dass sie die Anzeige einer Information bezüglich einer guten Funktion des Fahrzeuges befehlen, wenn keine Daten der bestimmten Liste in den gesammelten. Daten erfasst werden.

9. Vorrichtung nach einem der vorhergehenden Ansprüche, **dadurch gekennzeichnet, dass** die Steuereinrichtungen (9) für die Arbeit der Informationsanzeigeeinrichtungen Einrichtungen (15) zum Auslösen einer aufeinander folgenden schnellen Anzeige aller Informationen unabhängig von der Prioritätsreihenfolge der entsprechenden Daten umfassen.

10. Vorrichtung nach einem der vorhergehenden Ansprüche, **dadurch gekennzeichnet, dass** die Verarbeitungseinrichtungen (5) Einrichtungen (17) zum Erzeugen eines akustischen Alarmsignals und/oder eines optischen Alarmsignals umfassen, deren Funktion in Verbindung mit der Anzeige von Informationen ausgelöst wird, die Daten höherer Prioritätsreihenfolge entsprechen.

11. Vorrichtung nach Anspruch 10, **dadurch gekennzeichnet, dass** die Arbeit der Einrichtungen (17) zum Erzeugen eines Alarmsignals gleichzeitig mit der der Informationsanzeigeeinrichtungen (6) ausgelöst wird.

12. Vorrichtung nach einem der vorhergehenden Ansprüche, **dadurch gekennzeichnet, dass** die Informationsanzeigeeinrichtungen (6) eine Anzeigematrix (6a) für Piktogramme bezüglich der Daten der Zustände/Ereignisse umfassen.

13. Vorrichtung nach Anspruch 12, **dadurch gekennzeichnet, dass** die Informationsanzeigeeinrichtungen (6) gleichfalls eine alphanumerische Anzeige (16) umfassen, an der eine entsprechende Nachricht angezeigt wird.

14. Vorrichtung nach einem der vorhergehenden Ansprüche, **dadurch gekennzeichnet, dass** sich die Informationen bezüglich der Daten verschiedener Prioritätsreihenfolgen durch wenigstens ein Merkmal unterscheiden.

15. Vorrichtung nach Anspruch 14, **dadurch gekennzeichnet, dass** das Unterscheidungsmerkmal die Farbe der Informationen ist.

16. Vorrichtung nach einem der vorhergehenden Ansprüche, **dadurch gekennzeichnet, dass** die Informationen bezüglich Daten der selben Prioritätsreihenfolge abwechselnd angezeigt werden.

17. Vorrichtung nach einem der vorhergehenden Ansprüche, **dadurch gekennzeichnet, dass** die Anzahl der Prioritätsreihenfolgen gleich vier ist.

## Claims

1. System for displaying information relating to operating states/events of a motor vehicle, of the type comprising means (2) for acquiring states/events data and means (6) for displaying corresponding information for warning a user of this vehicle, comprising means (5) for processing these states/events data which means are interposed between the acquisition means (2) and the display means (6), **characterized in that** the means comprise means (7) for filtering these data, means (8) for classifying the data retained after filtering, on the basis of orders of priority as a function of levels of importance and of urgency of display and means (9) for monitoring the operation of the means (6) for displaying the corresponding information so as to carry out successive and cyclic displaying of this information on the basis of orders of priority, which means are adapted to instruct the displaying of information corresponding to data of higher order of priority only, during a predetermined time period (t1, t2, t3), before authorizing the displaying of information corresponding to data of lower order of priority.

2. System according to Claim 1, **characterized in that** the filtering means (7) comprise means (10) of temporal filtering of the states/events data so as to allow the processing of data present only during at least one predetermined time period.

3. System according to Claim 1 or 2, **characterized in that** the filtering means (7) comprise means (11) for masking certain states/events data so as to allow selection of the data to be processed by the processing means.

4. System according to Claim 3, **characterized in that** the filtering means (7) are controlled by means (2) for detecting the level of activation of the vehicle.

5. System according to any one of the preceding claims, **characterized in that** the means (8) for classifying on the basis of orders of priority of the states/events data are adapted to rank the latter as a function of preset rules stored in storage means therefor (12).

6. System according to Claim 5, **characterized in that** the preset rules take the form of at least one classification table.

7. System according to any one of the preceding claims, **characterized in that** the processing means (5) furthermore comprise means (13) for storing at least one predetermined list of states/events data for at least a specified level of activation of the vehicle, and means (8) for comparing the states/events data acquired for this level of activation of the vehicle with this predetermined list of data and **in that** the means (9) for monitoring the operation of the display means are adapted to trigger the displaying of a predetermined item of information as a function of the result of this comparison.

8. System according to Claim 7, **characterized in that** the predetermined list of data comprises vehicle operation fault/failure data and **in that** the means (9) for monitoring the operation of the display means are adapted to instruct the displaying of an item informing of the proper operation of the vehicle, if no data item of the predetermined list is detected in the data acquired.

9. System according to any one of the preceding claims, **characterized in that** the means (9) for monitoring the operation of the information display means comprise means (15) for triggering fast successive display of all the information regardless of the order of priority of the corresponding data.

10. System according to any one of the preceding claims, **characterized in that** the processing means (5) comprise means (17) for generating an audible and/or visual alarm signal, the operation of which is triggered in association with the displaying of information corresponding to data of higher order of priority.

11. System according to Claim 10, **characterized in that** the operation of the means for generating the alarm signal (17) is triggered at the same time as that of the information display means (6).

12. System according to any one of the preceding claims, **characterized in that** the information display means (6) comprise a matrix (6a) for displaying pictograms relating to the states/events data.

13. System according to Claim 12, **characterized in that** the information display means (6) also comprise an alphanumeric display (16) on which a corresponding message is displayed.

14. System according to any one of the preceding claims, **characterized in that** the information relating to data of different orders of priority are distinguished by at least one characteristic.

15. System according to Claim 14, **characterized in that** the different characteristic is the colour of the information.

16. System according to any one of the preceding claims, **characterized in that** the information relating to data of one and the same order of priority are displayed alternately.

17. System according to any one of the preceding claims, **characterized in that** the number of orders of priority is four.
